Europäisches Patentamt

(19) European Patent Office

Office européen des brevets

(11) Publication number: **0 323 039 B1**

# EUROPEAN PATENT SPECIFICATION

(45) Date of publication of patent specification: **13.05.92**

(51) Int. Cl.⁵: **F01N 5/04**, F01N 1/08, F01P 5/08

(21) Application number: **88311384.7**

(22) Date of filing: **01.12.88**

(54) Air cooling system in an internal combustion engine.

(30) Priority: **03.12.87 JP 306684/87**
**01.11.88 JP 276926/88**

(43) Date of publication of application:
**05.07.89 Bulletin 89/27**

(45) Publication of the grant of the patent:
**13.05.92 Bulletin 92/20**

(84) Designated Contracting States:
**DE FR GB IT SE**

(56) References cited:
CH-A- 145 225          DE-C- 400 345
FR-A- 556 947          FR-A- 758 570
FR-A- 796 853          FR-A- 1 200 477
FR-A- 1 384 058        GB-A- 386 901
GB-A- 448 878          GB-A- 986 576
US-A- 1 704 297        US-A- 2 083 515

(73) Proprietor: **Kakuta, Yoshiaki**
**1-8-1 Hamakawado**
**Kasukabe-shi Saitama-ken(JP)**

(72) Inventor: **Kakuta, Yoshiaki**
**1-8-1 Hamakawado**
**Kasukabe-shi Saitama-ken(JP)**

(74) Representative: **Sheader, Brian N. et al**
**Eric Potter & Clarkson St. Mary's Court St.**
**Mary's Gate**
**Nottingham NG1 1LE(GB)**

## Description

FIELD OF THE INVENTION

This invention relates to an air cooling system in an internal combustion engine.

An internal combustion engine which employs an air cooling type is known, and frequently used for small size and small heat generation. As the size of the engine is increased, a liquid cooling type engine using coolant, such as water is mostly employed. However, the boiling temperature of the liquid is lower than the heating temperature of the engine. Since the heating temperature of the engine has small difference from the ambient temperature when the engine is rotated, if a load is increased or the engine is continuously rotated at a high speed, the coolant immediately arrives at the boiling point to cause the engine to possibly overheat. Other disadvantages of the liquid cooling type engine include a complicated structure, necessity of sealing for preventing liquid from leaking at temperature change of approx 100 degrees C, necessity of managing coolant quantity, and components to be complicated for maintenance.

However, means for lowering the coolant liquid temperature in the liquid cooling type engine is a radiator, in which heat exchange from the air occurs. The mean atmospheric temperature is approx 20°C, or approx 50°C under the most severe condition. This is much lower than the boiling point of the coolant in the conventional cooling type, and there is a possibility of infinitive availability. The present inventor has advanced studies and developments of technique from this standpoint by air cooling directly the inner core of an engine.

One air cooling system in an internal combustion engine arranged to air cool an engine body is disclosed in FR-A-1384058. This known system comprises a jacket around parts of the engine body, an inlet through which air may be admitted to the jacket, a duct through which air may be removed from the jacket, a negative pressure generator provided in a system for exhausting gas from the engine body, an acceleration unit in the exhaust gas system comprising at least one portion of reduced cross-sectional area and an inlet port in the negative pressure generator through which air can be sucked by the negative pressure generator by way of the jacket and inlet, and exhausted.

The system of directly cooling the inner core of an engine not by natural cooling type like a conventional air cooling but forcibly air cooling is excellent, thereby providing a suction type air cooling system. This system has a feature of directly introducing atmospheric air to a section corresponding to the jacket of a liquid cooled engine, to air cool the engine using negative pressure or vacuum provided by the energy of the exhaust gas stream. Therefore, when the exhaust gas energy is low, suction negative pressure is low, and the suction negative pressure is increased dependent on the increase in the exhaust gas energy.

Further, the present inventor has discovered in the progress of studies and tests for the suction type of forced air cooling system of the present invention the fact that, in order to efficiently and effectively form the negative pressure, the mounting position of a negative pressure generator, the structure of the negative pressure generator and the process of negative pressure air stream are important, thereby necessarily enhancing remarkably the velocity of negative pressure air stream. More specifically, suction energy is extremely increased by accelerating extremely the negative pressure air stream. According to the experiments, it is accelerated to the stage of obtaining a velocity exceeding the velocity of sound when an engine is operating at a high speed.

SUMMARY OF THE INVENTION

An object of this invention is to provide a suction type air cooling system for sufficiently forcibly air cooling by a negative pressure air stream.

The above object of the invention can be achieved by an air cooling system in an internal combustion engine arranged to air cool an engine body, as set out in claim 1. Load resistance may be resistance of the exhaust gas conduit itself and/or load resistance of a catalyst, a silencer or the like provided in the exhaust gas conduit.

The air inlet port is provided downstream of one or more stages of acceleration units, and it is most preferable to uniformly provide a plurality of openings circumferentially.

The negative pressure generator is provided in the engine exhaust gas system has small resistance downstream thereof, and is downstream from a muffler, if a muffler is provided. This is because it prevents the accelerated negative pressure air stream from again receiving resistance by the muffler to decelerate the velocity of the negative air stream to decrease the suction energy.

The negative pressure generators are preferably composed of multiple stages. For example, in case of three stages, first, second and third stage negative pressure generators are sequentially disposed longitudinally from the upstream side. Since the volume of the suction atmospheric air introduced through the duct is added immediately after the respective acceleration units, the volume of the first acceleration unit is larger than of the second acceleration unit, and the third acceleration unit is sequentially larger in volume than the second acceleration unit, thereby setting a plurality of stages of suction acceleration streams.

The acceleration units described above are formed by providing throats in the exhaust gas passage. The throat may be formed, for example, in a venturi tube structure in which the sectional area of the exhaust gas stream passage is altered, a structure in which the passage sectional area is not altered, but acceleration is generated in accordance with the shape of an intermediate, or a combination of them. One or more throats are formed along the exhaust gas stream.

BRIEF DESCRIPTION OF THE DRAWINGS

Figure 1 is an explanatory view of an entire internal combustion engine having an exhaust gas stream accelerator for an internal combustion engine;

Figure 2 is a schematic view showing an internal combustion engine and two types of accelerators selectively combined with the internal combustion engine;

Figure 3 is a partial sectional view of first example of an acceleration unit throat;

Figure 4 is a concept view of an entire suction type air cooling system, embodying the invention;

Figure 5 is a sectional view of an engine body;

Figure 6 is an exploded perspective view of an accelerator;

Figure 7 is a side explanatory view of the accelerator; and

Figure 8 is a longitudinal sectional view of the accelerator.

DESCRIPTION OF THE PREFERRED EMBODIMENTS

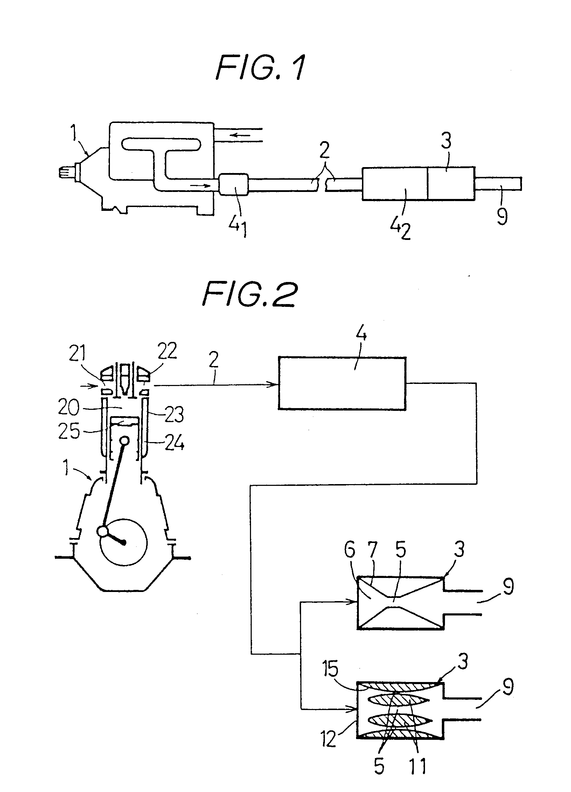

This invention will be described in detail with reference to the drawings. Figure 1 shows an internal combustion engine having an accelerator of this invention. Numeral 1 denotes an internal combustion engine body, numeral 2 denotes an exhaust gas conduit, numeral 3 denotes an acceleration unit in which loads 4, such as a catalyst $4_1$, a silencer $4_2$ are provided in the exhaust gas conduit 2, and provided at the rear of the loads. It avoids the defect that, when the accelerator is disposed before the load of an intermediate stream, accelerated exhaust gas stream is again decelerated by the loads.

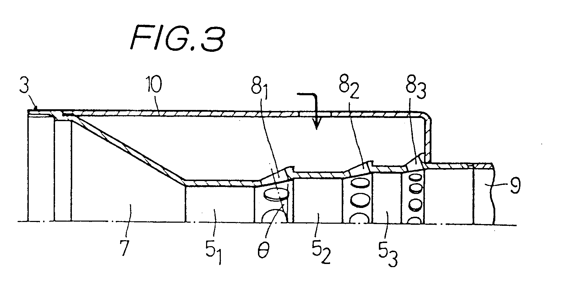

The accelerator is schematically shown in Figure 2, and various structures are shown in detail in Figure 3.

First type is an acceleration unit 3 having a sole throat 5 in a direction of an exhaust gas stream line, the throat 5 is gradually reduced in the sectional area of an exhaust gas passage 6, and formed of a throttle tube 7 for converting kinetic energy of the exhaust gas stream into a velocity.

As shown in detail in Figure 3, a structure for sucking in vacuum the air is also formed in the acceleration unit 3, air inlets $8_1$, $8_2$, $8_3$ are formed immediately after first, second and third throats $5_1$, $5_2$, $5_3$. Thus, when the exhaust gas stream is accelerated, the air is simultaneously accelerated to be sucked at three stages by the strong negative pressure formed as a result of the acceleration. The throats are increased in volumes sequentially by double, and so formed that the exhaust gas stream is exhausted smoothly together with the sucked air stream from a tail tube 9. The inlets $8_1$ to $8_3$ are preferably formed with an angle $\theta$ so as to accelerate the introduction of the air. Numeral 10 denotes a casing.

The air stream introduced by means of the negative pressure may be utilized for various utilities. For example, when the accelerated exhaust gas stream and the air stream are collided at an extremely high speed, detrimental components, such as CO, NOx contained in the exhaust gas can be significantly reduced. This is considered from the result that vigorous turbulence is generated by the collision so that the components in the exhaust gas are chemically reacted with the air. In this case, it is recognized a phenomenon that a large quantity of water is produced. The other utility includes the use of suction air stream to air cool an engine or to drive a turbo-super-charger.

The acceleration units 3 described above may be provided in multiple stages in a flowing direction. In Figure 2, numeral 20 denotes a combustion chamber, numeral 21 denotes a suction port, numeral 22 demotes an exhaust port, numeral 23 denotes a cylinder, and numeral 24 denotes a jacket. In the case of liquid cooling type, coolant liquid is circulated. However, when the air is forcibly sucked by the negative pressure into the jacket 24 in the example of Figure 3, it becomes an air jacket. Numeral 25 denotes a piston.

When the system of this invention is included in the exhaust gas conduit 2 of the internal combustion engine, the exhaust gas stream exhausted from the combustion engine is remarkably accelerated by the passage through throats 5 and 11 in the acceleration unit 3 to again recover the velocity of the exhaust gas stream decelerated by the resistances of the loads, such as a catalyst, a silencer provided in the exhaust gas system and the exhaust gas conduit itself, and further accelerated.

Since the exhaust gas stream is accelerated at the lowermost downstream of the exhaust gas conduit 2 as described above, the stream of the upstream area is sucked toward the downstream. As a result, the velocity of the exhaust gas stream steadily fed from the combustion chamber is always accelerated toward the direction for accelerating the exhaust into the atmosphere.

Therefore, its back pressure does not become excessive, it becomes a load at the time of low speed rotation to introduce a torque, and the acceleration is increased proportionally to the increase in the kinetic energy of the exhaust gas stream.

Since the exhaust gas stream accelerator performs an effect of remarkably accelerating the velocity of the exhaust gas stream, it can stably accelerate the exhaust of the exhaust gas into the atmosphere, stabilizes the operation by applying a torque at the time of low speed rotation to prevent the back pressure from becoming excessive, thereby improving its charging efficiency, almost eliminates detrimental components of the exhaust gas by the collision with the air at high speed, thereby remarkably improving the performance of the internal combustion engine.

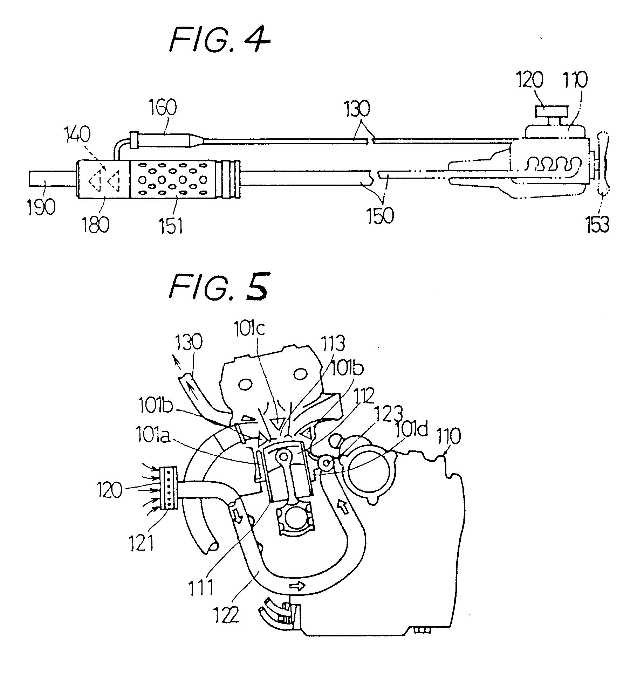

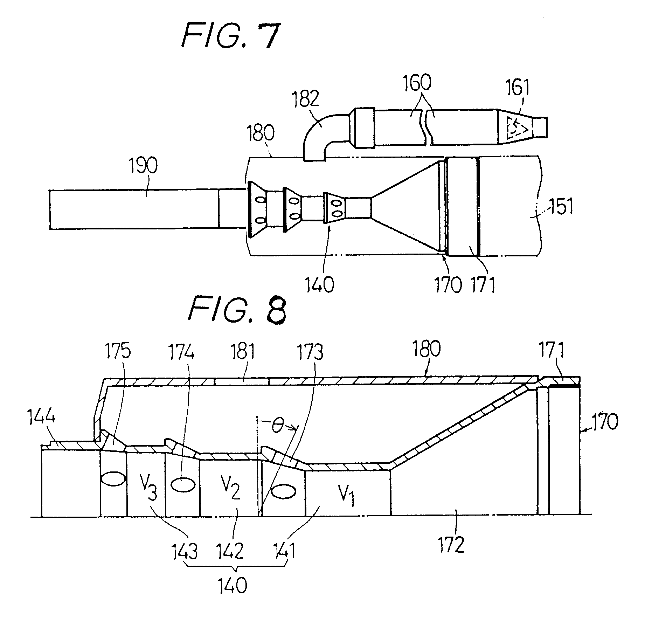

A suction type air cooling system in an internal combustion engine which uses the above-described exhaust gas stream accelerator will now be described in detail. In Figures 4 to 8, numeral 110 denotes an engine body in which the air cooling system of this invention is executed, numeral 120 denotes an atmospheric air inlet, numeral 130 denotes a duct for discharging heated air after heat exchanging, numeral 140 denotes a negative pressure generator, provided at the downstream of the muffler 151 of an exhaust gas conduit 150. Numeral 160 denotes a reverse silencer. An air jacket 101a, 101b, 101c, 101d,..., is so provided in the engine body 110 as to surround the periphery of heat generators, such as a cylinder 111, a piston 112, a cylinder head 113, etc. The air fed from the atmospheric air inlet 120 and purified by a filter 121 is introduced through an air inlet tube 122 and one or more ports 123 into all air jackets 101a,... A conduit, ie, an air discharge duct 130 for discharging the air after heat exchanging is connected to the air jackets 101a,...

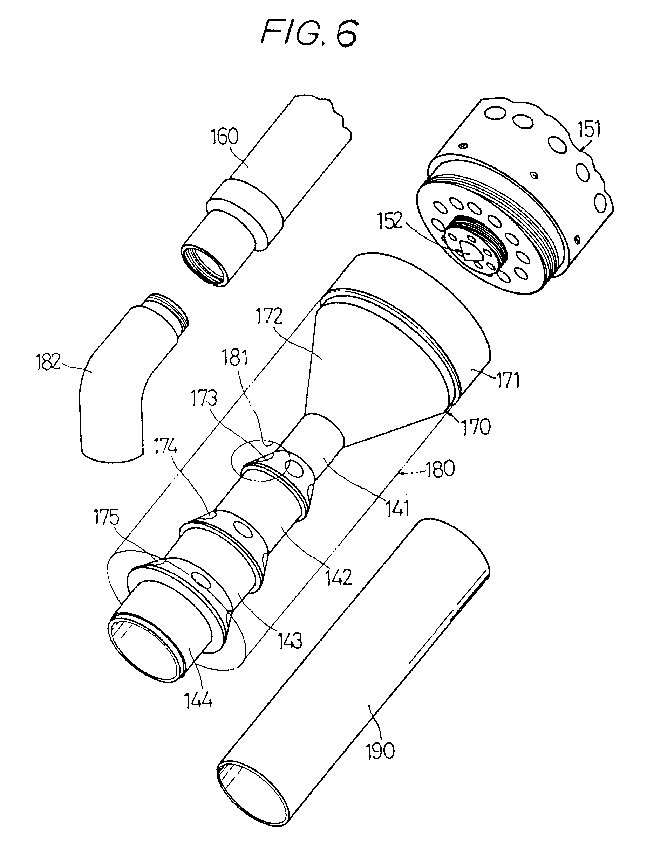

The accelerator is shown in Figures 6 to 8, and has an acceleration cylinder 170 and a casing 180. The acceleration cylinder 170 has a tapered tube 172 throttled in diameter at minimum from the large diameter section of the front end connected by a connector 171 to the muffler 151, a first acceleration unit 141, a first air inlet 173, a second acceleration unit 142, a second air inlet 172, a third acceleration unit 143, a third air inlet 175, and a connector 144 disposed longitudinally sequentially, and a tail tube 190 connected at the tail. Numeral 181 denotes an opening formed at the casing 180, connected through a connector pipe 182 to a reverse flow preventing silencer 160.

The volume $V_1$ of the first accleration unit 141 is set to the necessary volume to throttle the exhaust gas stream velocity to the minimum by a tapered tube 172 to obtain a first acceleration stream. The volumes of the second and third acceleration units of the embodiment are increased in a relations of $V_2 = AV_1$, $V_3 = BV_2$ (A = B = 2). The coefficients A, B may, of course, take another arbitrary numeric values. The inner diameter of the tail tube 190 is larger than that of the third acceleration unit 143. The first to third air inlets 173, 174, 175 are preferably formed with forwarding angle $\theta$, which is larger than "0" to be less than 90°, and preferably 10 to 30°. The numbers of the openings and the diameter of the opening of the inlets 173 to 175 are so set as to introduce the external air stream from the air discharge duct 130 at a high speed.

In the case of a 4-cycle gasoline engine for a motor cycle having 750cc of displacement, preferable results are obtained by 10 to 40 mm of the diameter of the first acceleration unit, 50 to 300 mm of the tail tube length. In the case of 3 stage acceleration as shown, the velocities of the air stream in the connector pipe 182 and the air inlets 173 to 175 exceeded sonic velocity.

The muffler 151 and the reverse silencer 160 are of a type in which triple and single bypass passages are provided at the periphery of the main passage to expansion silence it. The reverse silencer 160 has a check valve 161 for preventing the reverse flow of exhaust gas sound from the negative pressure generator 140 from occurring and momentary pressure from pulsating. Numeral 152 denotes a low speed torque generator provided at the rear end of the muffler 151 to throttle the exhaust gas passage in the muffler 151 to obtain a torque at a low speed. A cooling fan 153 is originally eliminated, but if it is provided, it serves to cool the exterior of the engine.

In the above-described air cooling system, when the engine body 110 is operated, the exhaust gas stream exhausted from the exhaust gas conduit 150 is accelerated, negative pressure of the magnitude responsive to the velocity is formed in the negative pressure generator 140. As a result, the flow of cooling air directed from the atmospheric air inlet 120 through the jackets 101a,..., and the discharge duct 130 toward the negative pressure generator 140 is forcibly generated, thereby air cooling the engine as predetermined.

In this case, the negative pressure generator 140 quickly accelerates at first stage in the first acceleration unit 141 continued to the tapered tube 172, then sequentially accelerates at high speed over three stages in the second and third acceleration units 142, 143. Accordingly, it is accelerated at high speed exceeding sonic velocity in the state accelerated at the maximum to increase the exhaust gas flow rate, and the negative pressure arrives at approximately 3 bar. More specifically, in case of experiments, an energy of penetrating 40 to 80 sheets of tissue paper is obtained at the connection port of the connector pipe 182 to the reverse silencer 160. This strong suction action is obtained by highly accelerating by utilizing the exhaust gas stream.

According to this invention as described above, the purpose of accelerating the negative air stream in the suction type air cooling system to an ultrahigh speed is performed to form a necessary negative pressure by the high speed air stream. Accordingly, the atmospheric air suction effect is remarkably enhanced. As a result, the cooled air is remarkably smoothly exhausted, low temperature cooling air can be efficiently introduced against it to prove the cooling effect by this invention. The negative pressure necessary to suck the cooling air is obtained by utilizing the exhaust gas stream to improve the efficiency of the entire engine at the maximum. Because the decrease in the utility efficiency of the engine output by producing the power and the rotary force from the engine to rotate the fan and forming the negative pressure is eliminated.

In the accelerator the exhaust gas energy is utilized to extremely accelerate the exhaust gas stream in the acceleration unit to form the negative pressure energy. Accordingly, if the formation of the negative pressure is conducted by the rotation output of the engine, it is affected by the rotation of the engine, but the exhaust energy at the time of operating the loads is converted to the suction energy as it is by the negative pressure generator, and air cooling effect responsive to the actual operating state can be obtained. Further, the exhaust gas temperature is extremely effectively lowered by this invention, resulting in mixture of large quantity of the air, thereby remarkably reducing the detrimental substance concentration in the exhaust gas.

**Claims**

1. An air cooling system in an internal combustion engine arranged to air cool an engine body (1;110), the cooling system comprising a jacket (24;101a-101d) around parts of the engine body (1;110), an inlet (120;122) through which air may be admitted to the jacket (24;101a-101d), a duct (130) through which air may be removed from the jacket (24;101a-101d), a negative pressure generator (140) provided in a system (2,4,9; 150,151,190) for exhausting gas from the engine body, an acceleration unit (3;170) in the exhaust gas system (2,4,9; 150,151,190) comprising at least one portion ($5_1,5_2,5_3$;141,142,143) of reduced cross-sectional area, and an inlet port (81,82,83; 173,174,175) in the negative pressure generator (140) through which air can be sucked by the negative pressure generator (140) by way of the jacket (24;101a-101d) and inlet (120,122), and exhausted characterised in that the negative pressure generator (140) comprises at least one acceleration unit (3;170) in the exhaust gas system (2,4,9; 150,151,190) which has a portion ($5_1,5_2,5_3$; 141,142,143) of reduced cross-sectional area and in that each inlet port (81,82,83; 173,174,175) is provided immediately downstream of a portion of reduced cross-sectional area to a region at which the cross-sectional area is increased, and in that the negative pressure generator (140) is provided in the exhaust gas system (2,4,9; 150,151,190) at a downstream end portion of the exhaust gas system and downstream of the resistance provided by the loads (4; 151) so that there is only a small resistance downstream of the negative pressure generator (140).

2. An air cooling system according to claim 1 characterised in that the negative pressure generator (140) comprises a casing (10; 180) around the acceleration unit (3; 170) having a port (181) through which the duct (130) opens into the casing (10; 180), the inlet port (81,82,83; 173,174,175) leading from the casing (10; 180) into the exhaust gas system.

3. An air cooling system according to claim 2 characterised in that a plurality of inlet ports ($8_1,8_2,8_3$; 173,174,175) are uniformly distributed around the acceleration unit (3; 170) circumferentially of the direction of the exhaust gas stream.

4. An air cooling system according to claim 3 characterised in that the inlet ports ($8_1,8_2,8_3$; 173,174,175) are inclined at an angle ( ) between 0° and 90°.

5. An air cooling system according to claim 4 characterised in that the angle of the ports is between 10° and 30°.

6. An air cooling system according to any one of claims 2 to 5 wherein a silencer (160) with a reverse flow preventing unit (161) is provided between the casing (10; 180) and the duct (130).

7. An air cooling system according to any one of the preceding claims characterised in that the system comprises a plurality of acceleration units (3; 141,142,143) disposed in series with one another.

8. An air cooling system according to claim 7 characterised in that each acceleration unit comprises a throat ($5_1,5_2,5_3$), each throat having a greater cross-sectional area than the previous throat upstream.

9. An air cooling system according to any one of claims 1 to 6 wherein two or more stages of said acceleration unit (3; 170) are disposed longitudinally in such a manner that the downstream acceleration unit (143,142) has larger volume ($V_3,V_2$) than the volume ($V_2,V_1$) of the immediately upstream acceleration unit (143,142).

10. An air cooling system according to any of the preceding claims comprising a tail tube (9; 190) downstream of the last acceleration unit having a sectional area larger than that of the last acceleration unit.

**Revendications**

1. Système de refroidissement à air dans un moteur à combustion interne, agencé pour rafroidir à l'air un corps de moteur (1:110), le système de refroidissement à air comprenant une chemise (24;101a-101d) entourant des parties du corps de moteur (1:110), un orifice d'entrée (120;122) par lequel de l'air peut être admis dans la chemise (24;101a-101d), une conduite (130) par laquelle de l'air peut être évacué de la chemise (24;101a-101d), un générateur de pression négative (140) disposé dans un système (2,4,9; 150,151,190) pour évacuer des gaz du corps de moteur, un dispositif d'accélération (3;170) dans le système d'échappement de gaz (2,4,9; 150,151,190) comprenant au moins une partie ($5_1,5_2,5_3$;141,142,143) de section droite réduite, et un orifice d'entrée (81,82,83; 173,174,175) dans le générateur de pression négative (140) par l'intermédiaire duquel de l'air peut être aspiré par le générateur de pression négative (140) au travers de la chemise (24;101a-101d) et de l'orifice d'entrée (120,122), puis évacué, caractérisé en ce que le générateur de pression négative (140) comprend au moins un dispositif d'accélération (3:170) dans le système pour gaz d'échappement (2,4,9; 150,151,190), qui comporte une partie ($5_1,5_2,5_3$;141,142,143) de section droite réduite et en ce que chaque orifice d'entrée (81,82,83; 173,174,175) est disposé à l'aval immédiat d'une partie de section droite réduite vers une région dans laquelle la section droite augmente, et en ce que le générateur de pression négative (140) est disposé dans le système pour gaz d'échappement (2,4,9; 150,151,190) dans une partie d'extrémité aval du système pour gaz d'échappement et en aval de la résistance produite par les charges (4;151) de façon à ce qu'il n'y ait qu'une faible résistance en aval du générateur de pression négative (140).

2. Système de refroidissement à air selon la revendication 1, caractérisé en ce que le générateur de pression négative (140) comprend un boîtier (10; 180) entourant le dispositif d'accélération (3; 170), comportant un orifice (181) par lequel la conduite (130) débouche dans le boîtier (10; 180), l'orifice d'entrée (81,82,83; 173,174,175) conduisant du boîtier (10; 180) jusque dans le système pour gaz d'échappement.

3. Système de refroidissement à air selon la revendication 2, caractérisé en ce qu'une pluralité d'orifices d'entrée (81,82,83; 173,174,175) sont uniformément répartis autour du dispositif d'accélération (3; 170), circonférentiellement par rapport à la direction du courant de gaz d'échappement.

4. Système de refroidissement à air selon la revendication 3, caractérisé en ce que les orifices d'entrée (81,82,83; 173,174,175) sont inclinés d'un angle ($\theta$) compris entre 0° et 90°.

5. Système de refroidissement à air selon la revendication 4, caractérisé en ce que l'angle des orifices est compris entre 10° et 30°.

6. Système de refroidissement à air selon l'une quelconque des revendications 2 à 5, dans lequel un silencieux (160) muni d'un dispositif empêchant un écoulement en retour (161) est disposé entre le boîtier (10;180) et la conduite (30).

7. Système de refroidissement à air selon l'une quelconque des revendications précédentes, caractérisé en ce que le système comprend une pluralité de dispositifs d'accélération (3;141,142,143) disposés en série las uns par rapport aux autres.

8. Système de refroidissement à air selon la revendication 7, caractérisé en ce que chaque dispositif d'accélération comprend un étranglement ($5_1,5_2,5_3$), chaque étranglement ayant une section droite supérieure à celle de l'étranglement amont la précédent.

9. Système de refroidissement à air selon les revendications 1 à 6, dans lequel deux ou plusieurs étages dudit dispositif d'accélération (3;170) sont disposés longitudinalement de telle manière que le dispositif d'accélération aval (143,142) ait un volume ($V_3,V_2$) plus grand que le volume ($V_2,V_1$) du dispositif d'accélération situé à l'amont immédiat (143, 142).

10. Système de refroidissement à air selon l'une quelconque des revendications précédentes, comprenant un tube de sortie (9;190), en aval du dernier dispositif d'accélération, ayant une section droite supérieure à celle du dernier dispositif d'accélération.

**Patentansprüche**

1. Luft-Kühlsystem in einem Verbrennungsmotor, das zum Luftkühlen eines Motorkörpers (1; 110) angeordnet ist, das Kühlsystem umfaßt eine Ummantelung (24; 101a- 101d) um, die Teile des Motorkörpers (1; 110) herum, einen Einlaß (120; 122) durch welchen Luft zu der Ummantelung (24; 101a-101d) zugeführt werden kann, eine Rohrleitung (130) durch welche Luft aus der Ummantelung( 24; 101a-101d) entnommen werden kann, einen Unterdruckgenerator (140), der in einem System (2, 4, 9; 150, 151, 190) vorgesehen ist, um Gas von dem Motorkörper anzusaugen, eine Beschleunigungseinheit (3; 170) in dem Abgassystem (2, 4, 9; 150, 151, 190), die mindestens einen Teil ($5_1$, $5_2$, $5_3$; 141, 142, 143) mit reduzierter Querschnittsfläche, und eine Einlaßöffnung ($8_1$, $8_2$, $8_3$; 173, 174, 175) in dem Unterdruckgenerator (140) durch welche Luft mit dem Unterdruckgenerator (140) über die Ummantelung (24; 101a- 101d) und den Einlaß (120, 122) angesaugt und ausgestoßen werden kann umfaßt,
dadurch **gekennzeichnet,** daß
der Unterdruckgenerator (140) mindestens eine Beschleunigungseinheit (3; 170) in dem Abgassystem (2, 4, 9; 150, 151, 190) umfaßt, welche einen Teil ($5_1$, $5_2$, $5_3$; 141, 142, 143) mit reduzierter Querschnittsfläche aufweist und daß

jede Einlaßöffnung ($8_1$, $8_2$, $8_3$; 173, 174, 175) unmittelbar stromabwärts des Teils mit reduzierter Querschnittsfläche in einer Region, in welcher die Querschnittsfläche vergrößert ist, vorgesehen ist, und daß der Unterdruckgenerator (140) vorgesehen ist in dem Abgassystem (2, 4, 9; 150, 131, 190) an einem stromabwärtigen Endteil des Abgassystems und stromabwärts von dem Widerstand, der durch die Ladung (4; 151) derart vorgesehen ist, daß lediglich ein geringer Widerstand stromabwärts des Unterdruckgenerators (140) herrscht.

2. Luft-Kühlsystem nach Anspruch 1, dadurch gekennzeichnet, daß der Unterdruckgenerator (140) ein Gehäuse (10; 180) um die Beschleunigungseinheit (3; 170) herum aufweist, mit einer Öffnung (181), durch welche die Rohrleitung (130) in das Gehäuse (10; 180) mündet, die Einlaßöffnung ($8_1$, $8_2$, $8_3$; 173, 174, 175) von dem Gehäuse (10; 180), in das Abgassystem führt.

3. Luft-Kühlsystem nach Anspruch 2, dadurch **gekennzeichnet,** daß eine Vielzahl von Einlaßöffnungen ($8_1$, $8_2$, $8_3$; 173, 174, 175) einheitlich in Umfangsrichtung des Abgasstroms um die Beschleunigungseinheit (3; 170) herum verteilt sind,

4. Luft-Kühlsystem nach Anspruch 3, dadurch **gekennzeichnet,** daß die Einlaßöffnungen ($8_1$, $8_2$, $8_3$; 173, 174, 175) in einem Winkel ($\theta$) zwischen 0° und 90° geneigt sind.

5. Luft-Kühlsystem nach Anspruch 4, dadurch **gekennzeichnet,** daß der Winkel der Öffnungen zwischen 10° und 30° beträgt.

6. Luft-Kühlsystem nach einem der Ansprüche 2 bis 5, worin ein Beruhiger (160) mit einer umkehrflußverhindernden Einheit (161), zwischen dem Gehäuse (10; 180) und der Rohrleitung (130) vorgesehen ist.

7. Luft-Kühlsystem nach einem der vorhergehenden Ansprüche, dadurch **gekennzeichnet,** daß das System eine Vielzahl von Beschleunigungseinheiten (3; 141, 142, 143) angeordnet in Reihen hintereinander umfaßt.

8. Luft-Kühlsystem nach Anspruch 7, dadurch **gekennzeichnet,** daß jede Beschleunigungseinheit einen Hals ($5_1$, $5_2$, $5_3$) umfaßt, wobei jeder Hals mit einer größeren Querschnittsfläche als der stromaufwärtige, vorausgehende Hals.

9. Luft-Kühlsystem nach einem der Ansprüche 1 bis 6, worin zwei oder mehrere Stufen der Beschleunigungseinheit (3; 170) der Länge nach in einer solchen Weise angeordnet sind, daß die stromabwärtige Beschleunigungseinheit (143, 142) größeres Volumen ($V_3$, $V_2$) aufweist, als das Volumen ($V_2$, $V_1$) der unmittelbar stromaufwärtigen Beschleunigungseinheit (143, 142).

10. Luft-Kühlsystem nach einem der vorangehenden Ansprüche, umfassend eine Endröhre (9; 190) stromabwärts der letzten Beschleunigungseinheit mit einem Teilgebiet größer als das der letzten Beschleunigungseinheit.

*FIG. 1*

*FIG.2*

FIG.3

FIG. 4

FIG. 5

EP 0 323 039 B1

FIG. 6

160

151

152

182

172

181

173

171

174

170

175

141

180

142

143

144

190

12

## FIG. 7

## FIG. 8